# FASCICULE DE BREVET EUROPEEN

(11) **EP 2 134 986 B1**
(45) Date de publication et mention de la délivrance du brevet: **04.01.2012**
(21) Numéro de dépôt: 08787947.4
(22) Date de dépôt: 14.04.2008
(51) Int. Cl.: F16H 19/00, F16H 25/18, F16K 31/04, F16K 31/528, F16H 25/08, F16K 31/524, F02M 25/07, F02B 47/08

(54) **DISPOSITIF DE TRANSFORMATION D'UN MOUVEMENT DE PIVOTEMENT D'UN PIGNON EN UN MOUVEMENT DE TRANSLATION D'UN COULISSEAU ET VANNE COMPORTANT UN TEL DISPOSITIF**
VORRICHTUNG ZUR UMWANDLUNG DER SCHWINGBEWEGUNG EINES ZAHNRADS IN EINE ÜBERSETZUNGSBEWEGUNG EINES SCHIEBERS UND VENTIL MIT EINER SOLCHEN VORRICHTUNG
DEVICE FOR CONVERTING A PIVOTING MOVEMENT OF A PINION INTO A TRANSLATIONAL MOVEMENT OF A SLIDE, AND VALVE COMPRISING SUCH A DEVICE

(30) Priorité: 16.04.2007 FR 0702723
(43) Date de publication de la demande: 23.12.2009
(73) Titulaire: Valeo Systèmes de Contrôle Moteur, 95800 Cergy (FR)
(72) Inventeur: ALBERT, Laurent, F-60640 Verderie (FR); PEYZARAT, Stéphane, F-60530 Le Mesnil En Thelle (FR)
(74) Mandataire: Cardon, Nicolas
(86) Numéro de dépôt international: PCT/FR2008/000513
(87) Numéro de publication internationale: WO 2008/145834

(56) Documents cités:
- EP-A- 0 365 377
- WO-A-2005/021954
- CH-A5- 640 615
- FR-A- 1 552 151

## Description

La présente invention concerne un dispositif de transformation d'un mouvement de pivotement d'un pignon en un mouvement de translation d'un coulisseau selon la revendication 1 et une vanne, selon la revendication 10, comportant un tel dispositif. Une vanne de ce type est par exemple utilisable dans un circuit de recirculation de gaz d'échappement d'un moteur thermique de véhicule automobile. EP1040266 décrit un dispositif selon le préambule de la revendication 1.

### ARRIERE PLAN DE L'INVENTION

Une telle vanne comporte généralement un corps dans lequel est monté coulissant un clapet qui est relié à un pignon de sortie d'un moteur rotatif par un dispositif de transformation d'un mouvement de pivotement d'un pignon, engrenant avec le pignon de sortie, en un mouvement de translation d'un coulisseau relié au clapet et monté coulissant dans le corps par l'intermédiaire d'une chemise de guidage. Le pignon est monté pivotant par rapport à un organe support du coulisseau comportant une paroi tubulaire montée fixe dans le corps. La paroi tubulaire est pourvue de surfaces de came coopérant chacune avec un galet suiveur monté sur un élément support qui, d'une part, est entraîné en rotation par une fourchette excentrée solidaire en rotation du pignon et qui, d'autre part, est monté pour pivoter à une extrémité du coulisseau. L'élément support est ainsi entraîné en rotation par le pignon provoquant le déplacement des galets le long des surfaces de came agencées pour déplacer en translation l'élément support qui entraîne avec lui le coulisseau et le clapet.

Le pignon est solidaire d'une extrémité d'un axe ayant une extrémité opposée de laquelle est solidaire la fourchette d'entraînement en rotation de l'élément support. L'axe est reçu à pivotement dans une chemise de guidage en rotation montée à force dans une platine fixée au corps. Le bon fonctionnement et la tenue dans le temps de la vanne et du dispositif de transformation nécessite un positionnement relatif précis du corps, du clapet, de la paroi tubulaire, de la platine, des chemises de guidage, de l'axe, du pignon et de la fourchette sans quoi survient une usure prématurée de tout ou partie de ces composants. L'obtention de la précision de positionnement requise rend le montage et l'usinage des composants relativement coûteux.

### OBJET DE L'INVENTION

Un but de l'invention est de réduire les contraintes de montage pesant sur le dispositif de transformation de mouvement afin de réduire le coût des produits dans lesquels il peut être implanté.

### RESUME DE L'INVENTION

A cet effet, on prévoit, un dispositif de transformation d'un mouvement de pivotement d'un pignon en un mouvement de translation d'un coulisseau, le dispositif comprenant un organe support du coulisseau et un élément support lié au pignon en rotation et lié au coulisseau en translation, le pignon étant monté pivotant par rapport à l'organe support qui comporte une paroi tubulaire fixe, la paroi tubulaire étant pourvue d'au moins une surface de came coopérant avec un galet suiveur monté sur l'élément support, le pignon étant porté par l'organe support coaxialement à la paroi tubulaire.

Ainsi, le pignon est monté directement sur l'organe support sans interposition d'une platine. Le positionnement relatif du pignon et de l'organe support en est facilité.

Selon un mode de réalisation avantageux, l'organe support comporte un pivot coaxial à la paroi tubulaire et sur lequel est monté le pignon et, de préférence, l'organe support est une cloche ayant un fond dont est solidaire le pivot, le fond présentant une ouverture de passage d'un élément de liaison du pignon à l'élément support.

L'organe support et le pivot peuvent ainsi facilement être obtenus d'une seule pièce.

De préférence, le dispositif comprend un doigt s'étendant depuis le pignon jusqu'à l'élément support pour former un élément de liaison du pignon à l'élément support, le doigt ayant une extrémité fixée au pignon et comprenant, à l'opposé, une portion d'extrémité reçue à coulissement dans un logement de l'élément support, le logement étant avantageusement pourvu d'une chemise à faible coefficient de friction.

L'élément de liaison, de structure simple, est directement implanté dans le pignon, ce qui limite le nombre de pièces et le poids du dispositif.

L'invention a également pour objet une vanne comportant un corps dans lequel est monté coulissant un clapet relié à un pignon de sortie d'un moteur rotatif d'actionnement par un dispositif de transformation d'un mouvement de pivotement d'un pignon engrenant avec le pignon de sortie en un mouvement de translation d'un coulisseau relié au clapet, le dispositif de transformation étant conforme à celui exposé ci-dessus.

La structure de la vanne est relativement simple et le montage de celle-ci simplifié.

D'autres caractéristiques et avantages de l'invention ressortiront à la lecture de la description qui suit d'un mode de réalisation particulier non limitatif de l'invention.

### BREVE DESCRIPTION DES DESSINS

Il sera fait référence aux dessins annexés, parmi lesquels :

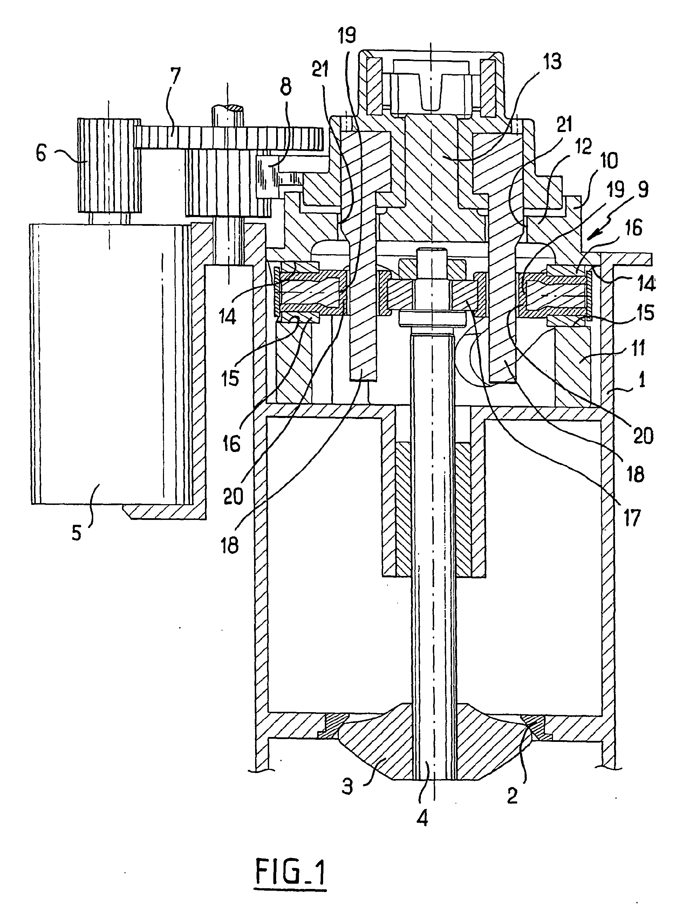

- la figure 1 est une vue partielle en coupe, d'une vanne conforme à l'invention,

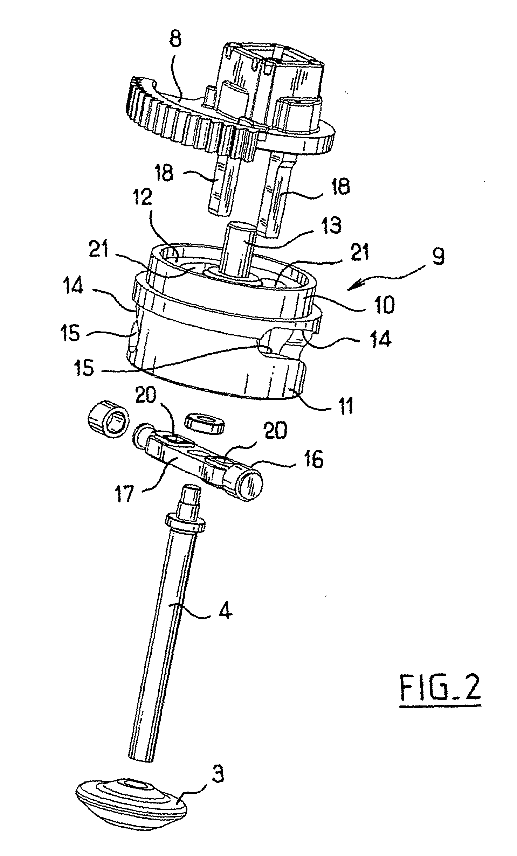

- la figure 2 est une vue en perspective éclatée du dispositif de transformation de mouvement de cette vanne,

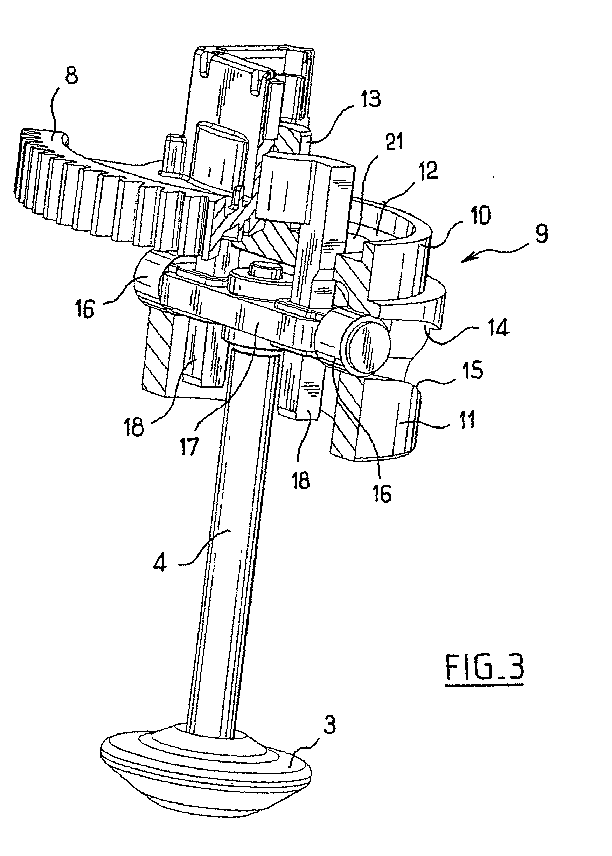

- la figure 3 est une vue en perspective, avec écorché de ce dispositif de transformation.

### DESCRIPTION DETAILLEE DE L'INVENTION

En référence aux figures, la vanne conforme à l'invention comprend un corps 1 délimitant un siège 2 pour un clapet 3 solidaire d'une extrémité d'une tige formant un coulisseau 4 monté pour coulisser dans le corps 1 entre une position d'obturation dans lequel le clapet 3 est en appui contre le siège 2 et une position d'ouverture dans laquelle le clapet 3 est écarté du siège 2.

Un moteur 5 est fixé dans le corps 1 pour entraîner en translation le coulisseau 4 et donc le clapet 3. Le moteur 5 a un pignon de sortie 6 relié par un jeu d'engrenages 7 à un pignon 8 formé d'un secteur denté. Le jeu d'engrenages 7 est monté sur le corps 1. Le pignon de sortie 6, le jeu d'engrenages 7 et le pignon 8 pivotent autour d'axes parallèles à la direction de coulissement du coulisseau 4. Le pignon 8 est associé à un dispositif, généralement désigné en 9, de transformation d'un mouvement de rotation du pignon 8 en un mouvement de translation du coulisseau 4.

Le dispositif 9 comprend un organe support 10, en forme d'une cloche fixée dans le corps 1, comportant une paroi tubulaire 11 centrée sur la direction de coulissement du coulisseau 4 et un fond 12 dont est solidaire un pivot 13 coaxial à la paroi tubulaire 11. Le pignon 8 est monté pour pivoter librement sur le pivot 13 de sorte que l'organe support 10 porte directement le pignon 8.

Deux rainures 14 sont ménagées transversalement dans la paroi tubulaire 11 en des positions diamétralement opposées. Chaque rainure 14 a une forme sensiblement en portion d'hélice agencée de manière à avoir un flanc inférieur en rampe formant une surface de came 15 sur laquelle roule un galet 16. Les galets 16 sont montés aux extrémités d'un élément support 17 qui est monté pour pivoter à l'extrémité du coulisseau 4 opposée au clapet 3 et qui s'étend diamétralement dans l'espace intérieur de la paroi tubulaire 11. L'élément support 17 est monté fixe en translation sur le coulisseau 4.

L'élément support 17 est lié en rotation au pignon 8 par des éléments de liaison 18 formés chacun d'un doigt s'étendant parallèlement à la direction de coulissement et ayant une extrémité solidaire du pignon 8 et, à l'opposé, une portion d'extrémité reçue à coulissement dans des logements 19 qui sont ménagés dans l'élément support 17 et sont équipés de chemises 20 à faible coefficient de friction. A noter qu'en une seule pièce avec les chemises 20, sont formés les paliers des galets 16. Des ouvertures 21 en arc de cercle ménagées dans le fond 12 permettent le passage des éléments de liaison 18 et leur déplacement en arc de cercle centré sur le pivot 13.

La rotation du pignon de sortie 6 provoque la rotation du pignon 8 par l'intermédiaire du jeu d'engrenages 7. Le pignon 8 entraîne en rotation l'élément support 17 par les éléments de liaison 18. La rotation de l'élément support 17 provoque le déplacement des galets 16 le long des surfaces de came 15 et les galets 16, en coopérant avec les surfaces de came 15, déplacent en translation l'élément support 17 et donc le coulisseau 4 et le clapet 3. Comme l'élément support 17 est monté pivotant sur le coulisseau 4, l'élément support 17, lorsqu'il est entraîné en rotation par le pignon 8 via les éléments de liaison 18, n'exerce pas de couple sur le clapet 3 limitant ainsi les frottements du clapet 3 sur son siège.

Bien entendu, l'invention n'est pas limitée au mode de réalisation décrit mais englobe toute variante entrant dans le cadre de l'invention telle que définie par les revendications.

En particulier, les moyens de guidage en rotation du pignon 8 peuvent être formés d'un élément mâle, comme le pivot 13, ou d'un élément femelle tel qu'un logement agencé pour assurer un guidage périphérique du pignon 8. Le pivot 13 peut être fixé rigidement au fond 12 de l'organe support 10.

L'organe support 10 peut avoir une forme différente de celle décrite et par exemple le fond 12 peut être remplacé par une poutre diamétrale supportant le pivot 13.

Les doigts 18 constituant les éléments de liaison peuvent avoir une extrémité solidaire de l'élément support et, à l'opposé, une portion d'extrémité montée pour coulisser dans un logement du pignon 8.

Les éléments de liaison peuvent avoir une structure différente de celle décrite et être formés par exemple de fourchettes d'entraînement de l'élément support 17.

Les surfaces de came 15 peuvent être formées d'une nervure en saillie dans la paroi tubulaire 11.

Le pignon 8 peut être relié au pignon de sortie du moteur par une courroie, au tout autre mode de transmission. Le moteur peut être monté pour avoir son axe formant un angle avec la direction de coulissement.

## Revendications

1. Dispositif de transformation d'un mouvement de pivotement d'un pignon (8) en un mouvement de translation d'un coulisseau (4), le dispositif comprenant un organe support (10) du coulisseau (4) et un élément support (17) lié au pignon (8) en rotation et lié au coulisseau (4) en translation, le pignon (8) étant monté pivotant par rapport à l'organe support (10) qui comporte une paroi tubulaire (11) fixe, la paroi tubulaire (11) étant pourvue d'au moins une surface de came (15) coopérant avec un galet (16) suiveur monté sur l'élément support (17), **caractérisé en ce que** le pignon (8) est porté par l'organe support (10) coaxialement à la paroi tubulaire (11).

2. Dispositif selon la revendication 1, dans lequel l'organe support (10) comporte un pivot (13) coaxial à la paroi tubulaire (11) et sur lequel est monté le pignon (8).

3. Dispositif selon la revendication 2, dans lequel l'organe support (10) est une cloche ayant un fond (12) dont est solidaire le pivot (13), le fond présentant une ouverture (21) de passage d'un élément de liaison (18) du pignon (8) à l'élément support (17).

4. Dispositif selon l'une quelconque des revendications 1 à 3, dans lequel la surface de came (15) est formée par un flanc d'une rainure (14) ménagée dans la paroi tubulaire (11).

5. Dispositif selon l'une quelconque des revendications 1 à 4, comprenant un doigt s'étendant depuis le pignon (8) jusqu'à l'élément support (17) pour former un élément de liaison du pignon à l'élément support.

6. Dispositif selon la revendication 5, dans lequel le doigt a une extrémité fixée au pignon (8) et comprend, à l'opposé, une portion d'extrémité reçue à coulissement dans un logement (19) de l'élément support (17).

7. Dispositif selon la revendication 6, dans lequel le logement (19) est pourvu d'une chemise (20) à faible coefficient de friction.

8. Dispositif selon l'une quelconque des revendications 1 à 7, dans lequel l'élément support (17) possède deux extrémités pourvues chacune d'un galet (16).

9. Dispositif selon l'une quelconque des revendications 1 à 8, dans lequel le pignon (8) est formé d'un secteur denté.

10. Vanne comportant un corps (1) dans lequel est monté coulissant un clapet (3) relié à un pignon de sortie (6) d'un moteur rotatif d'actionnement (5) par un dispositif (9) de transformation d'un mouvement de pivotement d'un pignon (8) engrenant avec le pignon de sortie en un mouvement de translation d'un coulisseau (4) relié au clapet, **caractérisé en ce que** le dispositif de transformation est conforme à l'une quelconque des revendications 1 à 9.

## Claims

1. Device for converting a pivoting movement of a pinion (8) into a translational movement of a slide (4), the device comprising a supporting member (10) for supporting the slide (4) and a supporting element (17) associated with the pinion (8) in rotation and associated with the slide (4) in translation, the pinion (8) being mounted so as to pivot relative to the supporting member (10) which comprises a fixed tubular wall (11), the tubular wall (11) being provided with at least one cam surface (15) interacting with a follower roller (16) mounted on the supporting element (17), **characterized in that** the pinion (8) is supported by the supporting member (10) coaxially with the tubular wall (11).

2. Device according to Claim 1, in which the supporting member (10) comprises a pivot (13) that is coaxial with the tubular wall (11) and on which the pinion (8) is mounted.

3. Device according to Claim 2, in which the supporting member (10) is a bell having a bottom (12) to which the pivot (13) is attached, the bottom having an opening (21) for the passage of an element (18) for connecting the pinion (8) to the supporting element (17).

4. Device according to any one of Claims 1 to 3, in which the cam surface (15) is formed by one side of a groove (14) arranged in the tubular wall (11).

5. Device according to any one of Claims 1 to 4, comprising a finger extending from the pinion (8) to the supporting element (17) in order to form an element for connecting the pinion to the supporting element.

6. Device according to Claim 5, in which the finger has one end attached to the pinion (8) and comprises, at the opposite end, an end portion received slidingly in a housing (19) of the supporting element (17).

7. Device according to Claim 6, in which the housing (19) is provided with a sleeve (20) with a low coefficient of friction.

8. Device according to any one of Claims 1 to 7, in which the supporting element (17) has two ends each provided with a roller (16).

9. Device according to any one of Claims 1 to 8, in which the pinion (8) is formed of a toothed sector.

10. Valve comprising a body (1) in which a valve element (3) is slidingly mounted connected to an output pinion (6) of an actuating rotary engine (5) by a device (9) for converting a pivoting movement of a pinion (8) meshed with the output pinion into a translational movement of a slide (4) connected to the valve element, **characterized in that** the converting device is according to any one of Claims 1 to 9.

## Patentansprüche

1. Vorrichtung zur Umwandlung einer Schwenkbewegung eines Ritzels (8) in eine Translationsbewegung eines Schiebers (4), wobei die Vorrichtung ein Stützglied (10) für den Schieber (4) und ein drehfest mit dem Ritzel (8) und translationsfest mit dem Schieber (4) verbundenes Stützelement (17) umfasst, wobei das Ritzel (8) schwenkbar bezüglich des Stützglieds (10) angebracht ist, das eine feststehende röhrenförmige Wand (11) aufweist, wobei die röhrenförmige Wand (11) mit mindestens einer Nockenfläche (15) versehen ist, die mit einer an dem Stützelement (17) angebrachten Folgerrolle (16) versehen ist, **dadurch gekennzeichnet, dass** das Ritzel (8) von dem Stützglied (10) koaxial zu der röhrenförmigen Wand (11) getragen wird.

2. Vorrichtung nach Anspruch 1, wobei das Stützglied (10) einen Drehzapfen (13) aufweist, der sich koaxial zu der röhrenförmigen Wand (11) erstreckt und auf dem das Ritzel (8) angebracht ist.

3. Vorrichtung nach Anspruch 2, wobei das Stützglied (10) eine Glocke mit einem Boden (12) ist, mit dem der Drehzapfen (13) fest verbunden ist, wobei der Boden eine Öffnung (21) zum Passieren eines Elements (18) zur Verbindung des Ritzels (8) mit dem Stützelement (17) aufweist.

4. Vorrichtung nach einem der Ansprüche 1 bis 3, wobei die Fläche des Nockens (15) durch eine Flanke einer in der röhrenförmigen Wand (11) ausgebildeten Nut (14) gebildet wird.

5. Vorrichtung nach einem der Ansprüche 1 bis 4, die einen Finger umfasst, der sich von dem Ritzel (8) bis zu dem Stützelement (17) erstreckt, um ein Element zur Verbindung des Ritzels mit dem Stützelement zu bilden.

6. Vorrichtung nach Anspruch 5, wobei der Finger ein an dem Ritzel (8) befestigtes Ende hat und am gegenüberliegenden Ende einen Endabschnitt aufweist, der verschiebbar in einer Aufnahme (19) des Stützelements (17) aufgenommen wird.

7. Vorrichtung nach Anspruch 6, wobei die Aufnahme (19) mit einer Buchse (20) mit einem geringen Reibungskoeffizienten versehen ist.

8. Vorrichtung nach einem der Ansprüche 1 bis 7, wobei das Stützelement (17) zwei Enden aufweist, die jeweils mit einer Rolle (16) versehen sind.

9. Vorrichtung nach einem der Ansprüche 1 bis 8, wobei das Ritzel (8) durch ein Zahnsegment gebildet wird.

10. Ventil mit einem Körper (1), in dem verschiebbar eine Klappe (3) angebracht ist, die durch eine Vorrichtung (9) zur Umwandlung einer Schwenkbewegung eines Ritzels (8), das mit einem Ausgangsritzel (6) kämmt, in eine Translationsbewegung eines Schiebers (4), der mit der Klappe verbunden ist, mit dem Ausgangsritzel (6) eines Drehbetätigungsmotors (5) verbunden ist, **dadurch gekennzeichnet, dass** die Umwandlungsvorrichtung einem der Ansprüche 1 bis 9 entspricht.
